# EUROPEAN PATENT APPLICATION

(11) **EP 2 815 871 A1**
(43) Date of publication of application: **24.12.2014**
(21) Application number: 14173265.1
(22) Date of filing: 20.06.2014
(51) Int. Cl.: B29C 65/18, B29C 51/16, B29C 63/02

(54) **Metallised film coating machine and method for plastic containers**

(30) Priority: 19.06.2013 TR 201307431
(71) Applicant: ÜSTÜN PLASTIK AMBALAJ SANYI VE TICARET A. S., Istanbul (TR)
(72) Inventor: Gülbahar Ahmet, Istanbul (TR); Gürken Fatih, Istanbul Sancaktepe (TR)
(74) Representative: Louis Pöhlau Lohrentz

(57) **Abstract**

The invention according to the application relates to a method for coating inner and/or outer surfaces and/or opening of containers (9) produced by plastic injection with metallised film (1) and a coating machine (1) for applying this method.

## Description

### Technical Field

The invention according to the application relates to a method for coating inner and/or outer surfaces and/or opening of containers produced by plastic injection with metallised film and a coating machine for applying this method.

### Prior Art

In our day, there are several methods and materials used for coating outer and inner surfaces of containers produced by plastic injection.

In the prior art, the two most frequently used basic methods in this field are "IML" and "sticker" coating.

The "sticker"coating method is based on,following manufacturing a product in an injection machine, adheringa coating material on the product by means of a machine that operates within automation via an additional process or by staff manually. In this method, the coating material may be removed without harming the product and thus is not sufficiently durable. Additionally, in the "sticker" coating method, it is not possible to coat plastic containers with metallised films which provide a gilded - metal look.

The "IML"coating method, on the other hand, is based on placing a coating material on the mould surface by an industrial robot that operates within automation or by staff manuallyduring injection, followed by closing the mould and injecting plastic to the mould.Since the coating material and the product are integrated during the process in this method, the coating material and the product do not separate when the product is removed. Also in this method, it is not possible to coat plastic containers with metallised films which provide a gilded - metal look.

Since prior art methods and machines for coating plastic materials do not allow using metallised films as coating material, a new method and machine should be developed.

### Aims and Brief Description of the Invention

The basic principle of the metallised film coating system according to the invention is that inner and/or outer surfaces and/or opening of containers produced by plastic injection are coated with metallised film.

With the metallised film coating machine according to the invention which is developed for implementing this method and basically employs a hydraulic system incorporating a heat exchanger, a coating which by no means comes off the plastic container's surface or deforms.

The following have been aimed for the development of metallised film coating method and machine according to the invention:
- Coating all surfaces of containers produced by plastic injection with metallised film,
- Coating opening of containers produced by plastic injection with metallised film to form a cap structure,
- Coating with metallised film in such a manner that it does not come off the plastic container and deform,
- Using polypropylene film or gilded filmfor coating.

### Definitions of Figures Illustrating the Invention

The figures prepared for a better explanation of a metallised film coating machine and method for plastic containers developed with the present invention are defined as follows:

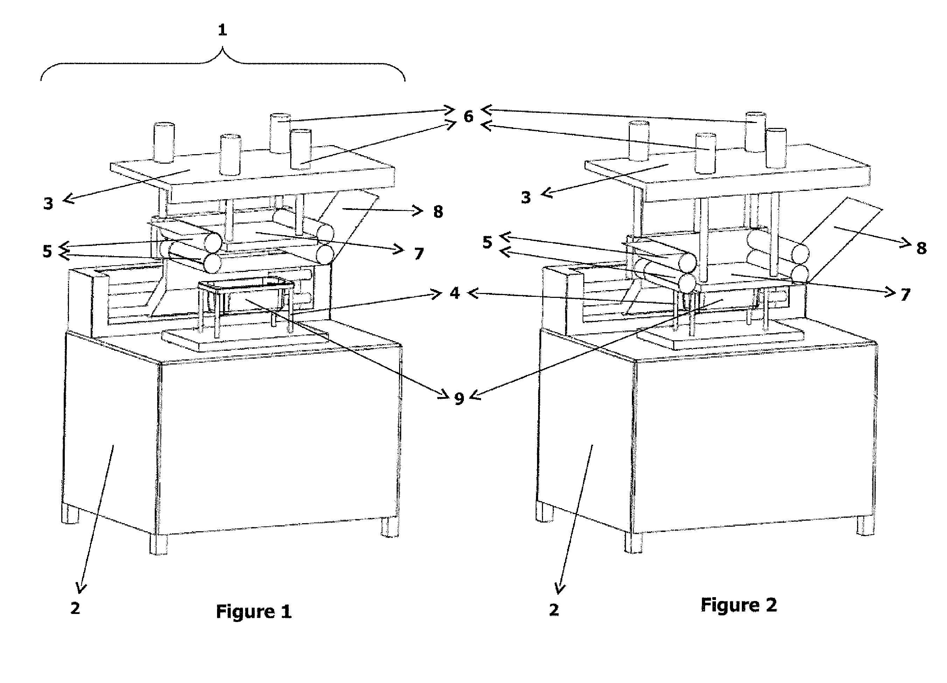

Figure 1: A perspective view of the metallised film coating machine and method for plastic containers according to the invention during preparation for pressing.
Figure 2: A perspective view of the metallised film coating machine and method for plastic containers according to the invention during pressing phase.

### Definitions of Elements/Sections/Parts Constituting the Invention

The elements/sections/parts included in the figures prepared for a better explanation of a metallised film coating machine and method for plastic containers developed with the present invention are enumerated and a corresponding definition for each number is provided below.
1. Metallised film coating machine
2. Machine body
3. Piston bracket
4. Container holder
5. Metallised film reel
6. Hydraulic piston
7. Heating plate
8. Metallised film
9. Container

### Detailed Description of the Invention

In the basic embodiment of themetallised film coating machine and method for plastic containers according to the invention developed for coating products manufactured by plastic injection, particularly inner and/or outer surfaces of plastic containers (9), inner and/or outer surfaces and/or opening of plastic containers (9) can be coated with metallised film(8) material by using hot pressing.

Coating process is performed by using the coating machine (1) and coating method developed with the present invention

The metallised film coating machine (1) according to the invention incorporates a heat exchanger and consists of;
- A body (2) acting as housing and supports the piston bracket (3), the container holder (4), metallised film reels (5), hydraulic pistons (6) and the heating plate (7),
- At least 4 hydraulic pistons (6) that moves the heating plate (7) vertically and applies pressure on the plastic container (9),
- A bracket (3) for fastening hydraulic pistons (6) to the body,
- A container holder (4) in which the plastic container (9) that is to be coated is placed in line with the direction of coating,
- At least 4 metallised film reels (5) for feeding metallised film (8) for coating to the mechanism, and,
- At least one heating plate (7) for pressing metallised film (8) onto the surface or opening of plastic containers (9).

The machine body (2) is manufactured from any heat-resistant metal alloy, while the piston bracket (3) which is made of a metal alloy that is the same with or different from that of the body (2) is integrated to the body (2).

The container holder (4) may be integrated to the body (2) or may be portable for using different holders in order to allow coating different surfaces and openings of plastic containers (9).

The metallised film coating method according to the invention may be implemented on the inner and/or outer surfaces of a plastic container (9), while it may also be implemented on a container (9) by applying on the rim of the container's (9) opening in order for metallised film (8) to act as a capand further comprises the process steps of
- Placing and fixing the plastic container (9) whose surface is to be coated in the container holder (4),
- Feeding the gilded metallised film (8) made of polypropylene material to the mechanism via metallised film reels (5) to lie in parallel over the plastic container (9),
- Lowering the heating plate (7) that has been priorly heated to a temperature of 175°C - 225°C by means of hydraulic pistons (6) to be pressed over the metallised film (8),
- Performing the pressing process with a pressure of 80- 140 bars for 8 - 15 seconds, and,
- Lifting the heating plate (7) that has been cooled by means of a heat exchanger from the container (9) and removing the polypropylene layer acting as a supporting layer for the metallised film (8).

The heating plate's (7) surface may be flat, while it is also possible to press the metallised film (8) onto the plastic container (9) in a certain pattern and/or to form a writing with the machine and method according to the invention, by embossing a pattern and/or writing on it.

The metallised film (8) used in the method according to the invention has a metallised look in various colours and may have a different thickness depending on whether the invention is appliedon either the surface or opening of the container.

## Claims

1. In the basic embodiment of the metallised film coating machine and method for plastic containers according to the invention developed for coating products manufactured by plastic injection, particularly inner and/or outer surfaces of plastic containers (9), inner and/or outer surfaces and/or opening of plastic containers (9) can be coated with metallised film (8) material by using hot pressing, wherein the metallised film coating machine (1) according to the invention incorporating a heat exchanger consists of
• A body (2) acting as housing and supports the piston bracket (3), thecontainerholder (4), metallised film reels (5), hydraulicpistons (6) and the heating plate (7),
• At least 4 hydraulicpistons (6) thatmovestheheatingplate (7) vertically and applies pressure on theplasticcontainer (9),
• A bracket (3) forfasteninghydraulicpistons (6) to the body,
• A containerholder (4) in which the plastic container (9) that is to be coated is placed in line with the direction of coating,
• At least 4 metallised film reels (5) for feeding metallised film (8) for coating to the mechanism, and,
• At leastoneheatingplate (7) forpressingmetallised film (8) onto the surface or opening of plasticcontainers (9).

2. A metallised film coating machine and method for plastic containers according to Claim 1, **characterised in that** the machine body (2) may be made of any heat-resistant metal alloy.

3. A metallised film coating machine and method for plastic containers according to Claim 1, **characterised in that** the piston bracket (3) is made of the same metal alloy as the body (2).

4. A metallised film coating machine and method for plastic containers according to Claim 1, **characterised in that** the piston bracket (3) is made of a metal alloy different from that of the body's (2).

5. A metallised film coating machine and method for plastic containers according to Claim 1, **characterised in that** the piston bracket (3) is integrated to the body (2).

6. A metallised film coating machine and method for plastic containers according to Claim 1, **characterised in that** the container holder (4) is integrated to the body (2).

7. A metallised film coating machine and method for plastic containers according to Claim 1, **characterised in that** the container holder (4) may be portable to enable using different holders in order to allow coating different surfaces and openings of plastic containers (9).

8. A metallised film coating machine and method for plastic containers according to Claim 1, **characterised in that** the heating plate's (7) printing surface is flat or embossed to contain a pattern, writing.

9. The metallised film coating method according to the invention may be implemented on the inner and/or outer surfaces of a plastic container (9), while it may also be implemented on a container (9) by applying on the rim of the container's (9) opening in order for metallised film (8) to act as a cap and further comprises the process steps of
• Placing and fixing the plastic container (9) whose surface is to be coated in the container holder (4),
• Feeding the gilded metallised film (8) made of polypropylene material to the mechanism via metallised film reels (5) to lie in parallel over the plastic container (9),
• Lowering the heating plate (7) that has been priorly heated to a temperature of 175°C - 225°C by means of hydraulic pistons (6) to be pressed over the metallised film (8),
• Performing the pressing process with a pressure of 80- 140 bars for 8 - 15 seconds, and,
• Lifting the heating plate (7) that has been cooled by means of a heat exchanger from the container (9) and removing the polypropylene layer acting as a supporting layer for the metallised film (8).

10. A metallised film coating method according Claim 9, **characterised in that** the metallised film (8) used has a metallised look in various colours.

11. A metallised film coating method according Claim 9, **characterised in that** the metallised film (8) used may have a different thickness depending on whether applied on either the surface or opening of the container (9).

12. A metallised film coating method according Claim 9, **characterised in that** the metallised film (8) may be pressed onto the plastic container (9) in a certain pattern and/or to form a writing based on the form of the heating plate's (7) surface.
